# EUROPEAN PATENT SPECIFICATION

(11) **EP 1 476 674 B1**
(45) Date of publication and mention of the grant of the patent: **18.01.2012**
(21) Application number: 02707086.1
(22) Date of filing: 19.02.2002
(51) Int. Cl.: F16D 69/02, C04B 35/80, C04B 35/573, C04B 41/51

(54) **PAD FOR CALIPERS OF DISK BRAKES**
BREMSBELAG FÜR TEILBELAG-SCHEIBENBREMSE
PLAQUETTE POUR ETRIERS DE FREINS A DISQUES

(43) Date of publication of application: 17.11.2004
(73) Proprietor: Freni Brembo S.p.A., 24035 Curno (Bergamo) (IT)
(72) Inventor: PACCHIANA, Giovanni, Paolo, I-24040 Locate Bergamo (IT); GOLLER, Ralf, Siegried, I-24124 Bergamo (IT)
(74) Representative: Siniscalco, Fabio
(86) International application number: PCT/IT2002/000096
(87) International publication number: WO 2003/071154

(56) References cited:
- EP-A- 1 084 997
- DE-A- 10 048 012
- US-A- 5 878 849
- US-A- 6 042 935

## Description

The present invention relates to a pad for disk-brake calipers.

It is widely known that a disk brake is composed basically of a caliper which extends astride a braking disk and is provided with seats for housing opposed pads, and of piston-cylinder units for actuating the pads.

In particular, each pad is formed by a portion known as the plate on which the piston acts directly, and by a portion known as the lining which faces the disk. The plate is generally made of metal, for example, of steel whereas the lining is made of friction material, for example, sintered metal powders.

Moreover, in order to be corrosion resistant, the pads are painted with suitable paints, at least in the region of the plates.

It is also known, for many applications, to provide the pads with shims for damping the vibrations that are created during braking in order to eliminate or at least to reduce the corresponding squealing.

Although they are widely used, the above-mentioned pads have many disadvantages.

The pads just described are heavy, so that the elements directly associated with them, such as, for example, the hub-carrier or the caliper, necessarily have to be of adequate strength.

In addition, the high temperatures which are reached during braking lead to deformations in the structure of the plates supporting the pads. As a result, the mechanical characteristics of the pads may, in some cases, be seriously compromised.

This disadvantage is even more marked in pads that are intended for disk brakes in which the disk is made of ceramic material, in which the temperatures reached during braking are higher than those reached by a cast iron disk.

Not least, it should be borne in mind that the coefficient of thermal transmission of the material of the plates is quite high. As a result, the pad can transfer a large amount of heat, particularly to the operating fluid of the hydraulic cylinder-piston unit. In this case, the brake fluid may boil and the bubbles of vapour thus formed may prevent the establishment of the correct pressure in the hydraulic circuit, with the risk that an effective braking force may not be achieved.

There is consequently a great need to provide a disk-brake pad which is of light weight whilst still having excellent structural and thermal-conductivity characteristics.

The problem underlying the present invention is therefore that of devising a pad for disk brakes which has structural and functional characteristics such as to satisfy the above-mentioned needs and at the same time to overcome the disadvantages of the pads of the prior art.

This problem is solved by a disk-brake pad as specified in the appended main claim.

Further characteristics and advantages of the disk-brake pad according to the present invention will become clear from the following description of two preferred embodiments thereof, given by way of non-limiting example, with reference to the appended drawings, in which:
Figure 1 is a plan view of a pad according to the invention,
Figure 2 is a view sectioned on the line II-II of Figure 1,
Figure 3 is a view taken along the line A of Figure 1,
Figure 4 is a view taken along the line A of Figure 1, of a variant of the pad according to the invention, and
Figure 5 is a plan view sectioned along the line V-V of Figure 4.

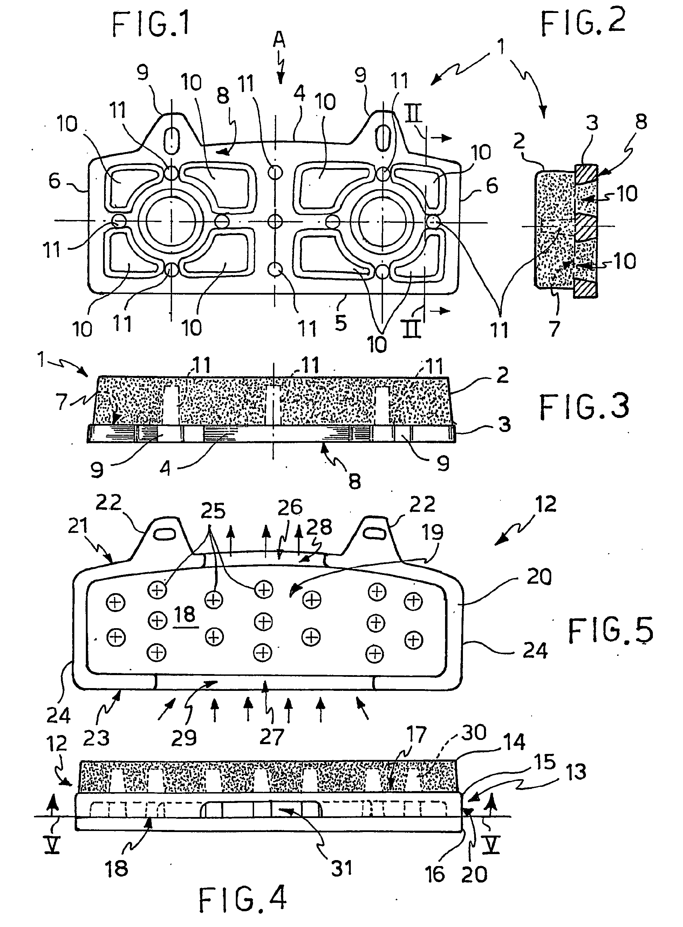

With reference to Figures 1 to 3, a pad according to the present invention, generally indicated 1, comprises friction material 2 supported by a plate 3.

The plate 3 is in the form of a substantially rectangular element having an upper longer side 4, a lower longer side 5, two shorter sides 6, an inner face 7 and an outer face 8.

In the present description, the term "upper" is used to identify any element of the pad or parts thereof which faces towards the periphery of the disk when the pad is in normal operative conditions. Similarly, the term "lower" is used to identify any element of the pad or parts thereof which faces towards the centre of the disk when the pad is in normal operative conditions.

The term "inner", on the other hand, is used to identify any element of the pad or parts thereof that faces towards a braking band on which the pad acts during normal operative conditions. Similarly, the term "outer" is used to identify any element of the pad or parts thereof that faces away from a braking band on which the pad acts during normal operative conditions.

In particular, the upper longer side 4 has a pair of eyes 9 each of which can house a pin (not shown) for restraining the pads on a corresponding caliper body (not shown), in conventional manner.

The outer face 8 is substantially flat and has a plurality of openings 10 which extend through the entire thickness of the plate 3.

The openings 10 are preferably grouped in fours so as to surround two portions of the outer face 8 on each of which a corresponding piston of a hydraulic piston-cylinder unit acts. In Figure 1, each of these portions is indicated by two concentric circles which define a taper of conventional type.

Moreover, as shown in Figure 2, the openings 10 have outwardly countersunk cross-sections so as to improve their engagement with the friction material 2, as will be explained further below.

A plurality of substantially frustoconical projections 11 project from the inner face 7 of the plate 3.

The friction material 2, which is of wholly conventional type, is anchored to the inner face 7 of the plate 3 by means of a first restrained engagement formed between the openings 10 and the friction material 2 which fits the cross-sections of the openings 10 perfectly.

A shape coupling is thus achieved between the cross-sections of the openings 10 and the shape of the cross-section of the friction material inside the openings 10.

In addition, the friction material 2 extends over the inner face 7 of the plate 3 so as also to extend over the projections 11.

The particular function of the dovetailed cross-sections of the openings 10 thus clearly advantageously enables the friction material 2 to be anchored firmly to the plate 3. This anchoring is then further improved in a direction tangential to the surface of the inner face 7 of the plate 3 by virtue of the presence of the projections 11.

In particular, the above-mentioned anchoring takes place during the moulding of the friction material 2 onto the face 7 of the plate 3.

In fact, in accordance with methods widely known in the field, the friction material 2 enters the openings 10, filling them completely so as to adopt a shape complementary thereto and, at the same time, covers the face 7 of the plate 3 so as also to incorporate the projections 11 completely.

The plate 3 advantageously comprises a composite ceramic or composite powder-metallurgical material.

In particular, the composite ceramic material is produced from a porous agglomerate of carbon fibres produced by pyrolysis and infiltrated with silicon, in which, during the infiltration stage, silicon carbides are formed and free silicon and carbon fibres remain (C/SiCSi), or from a porous agglomerate of silicon carbides infiltrated with silicon (SiSiC), or alumina (Al₂O₃).

The composite powder-metallurgical material, on the other hand, is produced from a porous structure of boron carbides infiltrated with aluminium (AlBC), or produced from a porous structure of silicon carbides infiltrated with aluminium (AlSiC), or produced form a porous structure of titanium carbides infiltrated with aluminium (AlTiC), or silicon oxynitride and aluminium (SiAlON).

Preferably, the ceramic or powder-metallurgical material comprises a mixture of filaments constituted substantially by carbon and silicon, treated at a temperature adequate to melt the silicon.

The term "filaments constituted substantially by carbon" is intended to include fibrous materials produced by pyrolysis of various products of synthetic origin, for example, polyacrylonitrile (PAN), or of natural origin, for example, pitches or natural cellulose-based sources such as vegetable fibres and wood.

These filaments are grouped in "bundles of filaments" comprising groups of filaments variable from 3000 to 50000 filament units and having a diameter of between 2 and 3 mm, the filament units of the filament bundles being associated to one another and impregnated with a resin, for example, polyurethane. These bundles are then chopped so as to have a length of less than 3 0 mm and, finally, are arranged randomly in the mixture.

The randomly-arranged bundles of filaments are commonly defined on the basis of the number of units making up the bundles, for example, 3K, 10K, 50K, etc.

The method of producing plates comprising a ceramic or powder-metallurgical material such as that just described will not be described herein since it is widely known in the field.

It is thus clear from the foregoing description that the pad 1 according to the present invention is of considerably reduced weight, avoiding the above-mentioned over-sizing, for example, of the hub-carrier or of the caliper.

In fact, first of all, the particular selection of the use of ceramic or powder-metallurgical material for the construction of the plate 3 enables the entire pad 1 to be made lighter since, as is widely known, the weight of a plate of the prior art (about 270 g in the embodiment shown) constitutes about 55% of the total weight of a pad of the prior art (about 500 g).

In contrast, the weight of the plate 3 in the embodiment of the invention may reach about 75 g for a total weight of the pad 1 of about 305 g. The percentage represented by the weight of the plate 3 is therefore reduced to only about 25%.

It should, however, be borne in mind that, in spite of the considerable lightness achieved, the structural characteristics of the plate 3 are in no way altered. In fact, the ceramic material has a high degree of stiffness so that it is not subject to deformation even if it is subjected to high temperatures.

This is particularly advantageous when the pads of the present invention are used for disk brakes with disks made of ceramic material; in which the temperatures reached, particularly on the braking surfaces, are higher than those reached by a cast iron disk during braking.

In fact, the coefficient of thermal conductivity of the ceramic material is less than that of the steel which is normally used for the plates of the prior art.

The amount of heat which is transferred to the operating fluid of the hydraulic cylinder-piston unit is thus considerably reduced, removing the risk of corresponding boiling which, as explained above, could dangerously affect the braking operation.

A further advantage afforded by the pad according to the present invention lies in the fact that the ceramic or powder-metallurgical material also has a good vibration-damping coefficient so that the shims of the prior art, which were used to damp the vibrations during braking, can be avoided.

A further advantage is represented by the elimination of the painting of the pad to prevent corrosion since the ceramic material does not suffer from this problem.

With reference to Figures 4 and 5, a variant of the pad according to the invention is generally indicated 12.

The pad 12 is of a shape substantially the same as that described above, that is, it has an upper longer side 21 provided with two eyes 22, a lower longer side 23, and two shorter sides 24.

In particular, the pad 12 comprises a support plate 13 and friction material 14 just the same as the friction material described above.

The plate 13 advantageously comprises a first portion 15 and a second portion 16, which are fixed together so as to form, with the friction material 14, a three-layered structure (Figure 4).

The first portion 15 also has an inner face 17 on which the friction material 14 is deposited by moulding. The inner face 17 preferably has frustoconical projections 30 identical to those described above, for anchoring the friction material 14.

The outer face 18 of the first portion 15, on the other hand, has a peripheral rim 20 which is raised relative to the surface of the outer face so as to define a recess 19.

In particular, as shown in Figure 5, the peripheral rim 20 has an upper interruption 28 at the level of the upper longer side 21 of the plate 12, between the two eyes 22, and a lower interruption 29 at the level of the lower longer side 23, and in a position substantially corresponding to that of the upper interruption 28.

Moreover, a plurality of pins 25, which are preferably substantially cylindrical and of a height equal to the height of the peripheral rim 20, extend from the surface of the recess 19.

The second portion 16 of the plate 13 is substantially a plate which is fixed to the first portion 15 on the side having the outer face 18 by wholly conventional methods so as to cover the recess 19.

An internal chamber 31 is thus created between the two, first and second portions 15 and 16, as shown in Figure 4.

This chamber 31 advantageously has an upper opening 26 and a lower opening 27, the former being defined by the peripheral rim 20, by the upper interruption 28 of the first portion 15, and by the second portion 16, and the latter being defined by the peripheral rim 20, by the lower interruption 29 of the first portion, and by the second portion 16.

The advantage afforded by this variant of the present invention lies in the fact that the chamber 31 which is disposed between the first portion 15 and the second portion 16 of the plate 13 and is open at the top and at the bottom, permits excellent ventilation of the plate, thus favouring the elimination of the heat which is created during braking. In fact, as shown in Figure 5, a ventilation flow can be formed which emerges from interior the plate 13 towards the exterior through its upper opening 26.

Moreover, as is clear, by virtue of the provision of the pins 25, the structure of the plate is not weakened even though excellent characteristics of lightness are achieved.

The pad for disk-brake calipers according to the present invention may be modified according to preferences or particular requirements.

For example, the internal chamber 31 between the first portion 15 and the second portion 16 of the plate 13 of the pad 12 may be labyrinthine so as to channel the air-flow advantageously.

The composition of the ceramic or powder-metallurgical material may vary with regard to the quantities of the various substances, according to requirements.

The shape of the pads and/or of their components may be modified so as to adapt them to calipers of different shapes and/or sizes.

The fitting of the friction material 2 in the openings 10 of the plate of the pad 1 may also be achieved with shapes other than the preferred shape shown in Figure 2.

As can be appreciated from the foregoing description, the pad for disk-brake calipers according to the invention satisfies the needs referred to in the introductory part of the present description and at the same time overcomes the disadvantages of the pads of the prior art.

Naturally, to satisfy contingent and specific requirements, a person skilled in the art may apply to the above-described pad for disk-brake calipers many modifications and variations all of which, however, are included within the scope of the invention as defined by the appended claims.

## Claims

1. A pad (1; 12) for disk brakes comprising a plate (3; 13) for supporting a friction material (2; 14), wherein the plate (3; 13) is made of a composite ceramic material or of a composite powder-metallurgical material, wherein said plate (3, 13) comprises openings (10) which extend through the entire thickness of the plate (3) and which have outwardly countersunk cross-sections and wherein said friction material (2) is engaged with said plate (3, 13) by a shape coupling between said openings (10) and friction material inside said openings (10).

2. A pad (1; 12) for disk brakes according to Claim 1 in which the composite ceramic material is selected from a group consisting of a porous agglomerate of carbon fibres produced by pyrolysis and infiltrated with silicon in which, during the infiltration stage, silicon carbides are formed and free silicon and carbon fibres remain (C/SiCSi), a porous agglomerate of silicon carbides infiltrated with silicon (SiSiC), or alumina (Al₂O₃).

3. A pad (1; 12) for disk brakes according to Claim 1 in which the composite powder-metallurgical material is selected from the group consisting of a porous structure of boron carbides infiltrated with aluminium (AlBC), a porous structure of silicon carbides infiltrated with aluminium (AlSiC), a porous structure of titanium carbides infiltrated with aluminium (AlTiC), or silicon oxynitride and aluminium (SiAlON).

4. A pad (1; 12) for disk brakes according to any one of Claims 1 to 3 in which the ceramic or powder-metallurgical material comprises a mixture of filaments made of carbon and silicon treated at a temperature to melt the silicon.

5. A pad (1; 12) for disk brakes according to Claim 4 in which the mixture of filaments is produced by pyrolysis of synthetic or of natural fibre products.

6. A pad (1; 12) for disk brakes according to Claim 5 in which the synthetic fibre products are polyacrylonitrile (PAN) and the natural fibre products comprise pitches, and natural cellulose.

7. A pad (1; 12) for disk brakes according to any one of Claims 4 to 6 in which the fibrous material comprises filament bundles containing groups of 3000 to 50000 filament units and having a diameter of between 2 and 3 mm and a length of less than 30 mm.

8. A pad (1; 12) for disk brakes according to Claim 7 in which the filament units of the filament bundles are associated to one another and impregnated with a resin.

9. A pad (1; 12) for disk brakes according to Claim 7 or Claim 8 in which the filament bundles are arranged randomly in the mixture.

10. A pad (1; 12) for disk brakes according to any one of Claims 1 to 9, comprising anchoring means (10, 11; 30) for anchoring the friction material (2; 14) to the plate (3; 13).

11. A pad (1; 12) for disk brakes according to Claim 10 in which the anchoring means comprise projections (11; 30) which extend in the friction material (2; 14).

12. A pad (1) for disk brakes according to Claim 10 or Claim 11 in which the anchoring means comprise through-holes (10) formed in the thickness of the plate (3).

13. A pad (1) for disk brakes according to Claim 12 in which the through-holes (10) have outwardly countersunk cross-sections.

14. A pad (12) for disk brakes according to any one of Claims 1 to 11 in which the plate (13) has an internal chamber (31) having an upper opening (26) and a lower opening (29) to permit ventilation of the plate.

15. A pad (12) for disk brakes according to Claim 14 in which the plate (13) comprises pins (25) positioned inside the internal chamber (31) for imparting suitable strength to the plate.

16. A disk-brake caliper comprising pads (1; 12) according to any one of Claims 1 to 15.

## Patentansprüche

1. Ein Belag (1; 12) für Scheibenbremsen, aufweisend eine Platte (3; 13) zum Tragen eines Abriebmaterials (2; 14), wobei die Platte (3; 13) aus einem Verbund-Keramik-Material oder aus einem Verbund-Pudermetallurgischen-Material gemacht ist, wobei die Platte (3,13) Öffnungen (10) aufweist, die sich durch die gesamte Dicke von der Platte (3) erstrecken und die nach außen hin konische Querschnitte haben und wobei das Abriebmaterial (2) mit der Platte (3, 13) in Verbindung steht durch eine Form-Kupplung zwischen den Öffnungen (10) und dem Abriebmaterial in den Öffnungen (10).

2. Ein Belag (1; 12) für Scheibenbremsen nach Anspruch 1, in dem das Verbund-Keramik-Material aus einer Gruppe ausgewählt wird, bestehend aus einem porösen Agglomerat aus Karbonfasern, das durch Pyrolyse hergestellt wird und mit Silikon infiltriert ist, in dem, während des Infiltrier-Schrittes, Silikon-Karbide geformt werden und übrig bleiben freies Silikon und Karbonfasern (C/SiCSi), ein poröses Agglomerat aus Silikon-Karbiden das infiltriert ist mit Silikon (SiSiC), oder Aluminiumoxid (Al₂O₃).

3. Ein Belag (1; 12) für Scheibenbremsen nach Anspruch 1, in dem das Verbund-Pudermetallurgische-Material aus der Gruppe ausgewählt wird, bestehend aus einer porösen Struktur aus Boron-Karbiden infiltriert mit Aluminium (AlBC), einer porösen Struktur aus Silikon-Karbiden infiltriert mit Aluminium (AlSiC), einer porösen Struktur aus Titanium-Karbiden infiltriert mit Aluminium (AlTiC), oder Silikon-Oxinitrid und Aluminium (SiAlON).

4. Ein Belag (1; 12) für Scheibenbremsen nach einem der Ansprüche 1 bis 3, in dem das keramische- oder Puder-Metallurgische-Material eine Mischung aus Filamenten aufweist, die aus Karbon gemacht sind und silikonbehandelt bei einer Temperatur um das Silikon zu schmelzen.

5. Ein Belag (1; 12) für Scheibenbremsen nach Anspruch 4, in dem die Mischung aus Filamenten hergestellt wird durch Pyrolyse von synthetischen oder von natürlichen Faserprodukten.

6. Ein Belag (1; 12) für Scheibenbremsen nach Anspruch 5, in dem die synthetischen Faserprodukte polyacrylnitril (PAN) sind und die natürlichen Faserprodukte weisen Steigungen und natürliche Zellulose auf.

7. Ein Belag (1; 12) für Scheibenbremsen nach einem der Ansprüche 4 bis 6, in dem das faserige Material Filament-Bündel aufweist, die Gruppen von 3000 bis 50000 Filament-Einheiten beinhalten und einen Durchmesser zwischen 2 und 3 mm haben und eine Länge von weniger als 30 mm.

8. Ein Belag (1; 12) für Scheibenbremsen nach Anspruch 7, in dem die Filament-Einheiten von den Filament-Bündeln miteinander verbunden sind und mit einem Harz imprägniert sind.

9. Ein Belag (1; 12) für Scheibenbremsen nach Anspruch 7 oder Anspruch 8, in dem die Filament-Bündel zufällig in der Mischung angeordnet sind.

10. Ein Belag (1; 12) für Scheibenbremsen nach einem der Ansprüche 1 bis 9, aufweisend Ankermittel (10, 11; 30) um das Abriebmaterial (2; 14) mit der Platte (3; 13) zu verankern.

11. Ein Belag (1; 12) für Scheibenbremsen nach Anspruch 10, in dem die Ankermittel Erhebungen (11; 30) aufweisen, die sich in dem Abriebmaterial (2; 14) erstrecken.

12. Ein Belag (1) für Scheibenbremsen nach Anspruch 10 oder Anspruch 11, in dem die Ankermittel Durchgangslöcher (10) aufweisen, die in der Dicke von der Platte (3) geformt sind.

13. Ein Belag (1) für Scheibenbremsen nach Anspruch 12, in dem die Durchgangslöcher (10) nach außen konische Querschnitte haben.

14. Ein Belag (12) für Scheibenbremsen nach einem der Ansprüche 1 bis 11, in dem die Platte (13) eine interne Kammer (31) hat, die eine obere Öffnung (26) und eine untere Öffnung (29) hat, um Belüftung der Platte zu erlauben.

15. Ein Belag (12) für Scheibenbremsen nach Anspruch 14, in dem die Platte (13) Stifte (25) aufweist, die in der internen Kammer (31) positioniert sind, um der Platte eine angemessene Stärke zu vermitteln.

16. Ein Scheibenbremsen-Bremssattel aufweisend Beläge (1; 12) nach einem der Ansprüche 1 bis 15.

## Revendications

1. Plaquette (1 ; 12) pour freins à disque comprenant une plaque (3 ; 13) afin de supporter un matériau de friction (2 ; 14), dans laquelle la plaque (3 ; 13) est réalisée avec un matériau en céramique composite ou avec un matériau métallurgique en poudre composite, dans laquelle ladite plaque (3 ; 13) comprend des ouvertures (10) qui s'étendent à travers toute l'épaisseur de la plaque (3) et qui ont des sections transversales fraisées vers l'extérieur et dans laquelle ledit matériau de friction (2) est mis en prise avec ladite plaque (3, 13) par un couplage de forme entre lesdites ouvertures (10) et le matériau de friction à l'intérieur desdites ouvertures (10).

2. Plaquette (1 ; 12) pour freins à disque selon la revendication 1, dans laquelle le matériau en céramique composite est choisi dans un groupe comprenant un agglomérat poreux de fibres de carbone produit par pyrolyse et en infiltrant du silicium dans lequel, pendant l'étape d'infiltration, on forme des carbures de silicium et il reste du silicium libre et des fibres de carbone (C/SiCSi), un agglomérat poreux de carbures de silicium infiltré avec du silicium (SiSiC) ou de l'alumine (Al₂O₃).

3. Plaquette (1 ; 12) pour freins à disque selon la revendication 1, dans laquelle le matériau métallurgique en poudre composite est choisi dans le groupe comprenant une structure poreuse de carbures de bore infiltrée avec de l'aluminium (AlBC), une structure poreuse de carbures de silicium infiltrée avec de l'aluminium (AlSiC), une structure poreuse de carbures de titane infiltrée avec de l'aluminium (AlTiC) ou de l'oxynitrure de silicium et de l'aluminium (SiAlON).

4. Plaquette (1 ; 12) pour freins à disque selon l'une quelconque des revendications 1 à 3, dans laquelle le matériau en céramique ou le matériau métallurgique en poudre comprend un mélange de filaments réalisé à partir de carbone et de silicium traité à une certaine température pour faire fondre le silicium.

5. Plaquette (1; 12) pour freins à disque selon la revendication 4, dans laquelle le mélange de filaments est produit par pyrolyse de produits synthétiques ou de fibres naturelles.

6. Plaquette (1 ; 12) pour freins à disque selon la revendication 5, dans laquelle les produits de fibre synthétiques sont du polyacrylonitrile (PAN) et les produits de fibre naturelles comprennent la poix et la cellulose naturelle.

7. Plaquette (1 ; 12) pour freins à disque selon l'une quelconque des revendications 4 à 6, dans laquelle le matériau fibreux comprend des faisceaux de filament contenant des groupes de 3 000 à 50 000 unités de filament et ayant un diamètre compris entre 2 et 3 mm et une longueur inférieure à 30 mm.

8. Plaquette (1 ; 12) pour freins à disque selon la revendication 7, dans laquelle les unités de filament des faisceaux de filament sont associées entre elles et imprégnées avec une résine.

9. Plaquette (1 ; 12) pour freins à disque selon la revendication 7 ou la revendication 8, dans laquelle les faisceaux de filament sont agencés de manière aléatoire dans le mélange.

10. Plaquette (1 ; 12) pour freins à disque selon l'une quelconque des revendications 1 à 9, comprenant des moyens d'ancrage (10, 11 ; 30) pour ancrer le matériau de friction (2 ; 14) à la plaque (3 ; 13).

11. Plaquette (1 ; 12) pour freins à disque selon la revendication 10, dans laquelle les moyens d'ancrage comprennent des saillies (11 ; 30) qui s'étendent dans le matériau de friction (2 ; 14).

12. Plaquette (1) pour freins à disque selon la revendication 10 ou la revendication 11, dans laquelle les moyens d'ancrage comprennent des trous de passage (10) formés dans l'épaisseur de la plaque (3).

13. Plaquette (1) pour freins à disque selon la revendication 12, dans laquelle les trous de passage (10) ont des sections transversales fraisées vers l'extérieur.

14. Plaquette (12) pour freins à disque selon l'une quelconque des revendications 1 à 11, dans laquelle la plaque (13) a une chambre interne (31) ayant une ouverture supérieure (26) et une ouverture inférieure (29) pour permettre la ventilation de la plaque.

15. Plaquette (12) pour freins à disque selon la revendication 14, dans laquelle la plaque (13) comprend des broches (25) positionnées à l'intérieur de la chambre interne (31) pour communiquer la résistance appropriée à la plaque.

16. Etrier de frein à disque comprenant des plaquettes (1 ; 12) selon l'une quelconque des revendications 1 à 15.
